# EUROPÄISCHE PATENTSCHRIFT

(11) **EP 1 159 520 B1**
(45) Veröffentlichungstag und Bekanntmachung des Hinweises auf die Patenterteilung: **29.12.2004**
(21) Anmeldenummer: 00979432.2
(22) Anmeldetag: 17.10.2000
(51) Int. Cl.: F01P 7/16, B60H 1/00

(54) **VERFAHREN ZUR STEUERUNG/REGELUNG VON WÄRMESTRÖMEN IM KRAFTFAHRZEUG**
METHOD FOR CONTROLLING HEAT FLOWS IN A MOTOR VEHICLE
PROCEDE POUR COMMANDER/REGULER DES FLUX DE CHALEUR DANS UN VEHICULE AUTOMOBILE

(30) Priorität: 06.11.1999 DE 19953511
(43) Veröffentlichungstag der Anmeldung: 05.12.2001
(73) Patentinhaber: ROBERT BOSCH GMBH, 70442 Stuttgart (DE)
(72) Erfinder: HESSE, Ullrich, 71563 Affalterbach (DE); LEHR, Walter, 70499 Stutgart (DE)
(86) Internationale Anmeldenummer: PCT/DE2000/003656
(87) Internationale Veröffentlichungsnummer: WO 2001/034953

(56) Entgegenhaltungen:
- EP-A- 0 811 757
- EP-A- 0 974 742
- GB-A- 2 323 682
- US-A- 5 553 661

## Beschreibung

### Stand der Technik

Die Erfindung betrifft ein Verfahren zur Steuerung/Regelung der von Wärmeerzeugern und Wärmeverbrauchern im Kraftfahrzeug verursachten Wärmeströme wenigstens auf der Basis eines momentanen Lastzustands des Kraftfahrzeugmotors und momentaner Fahrzeugbetriebs- und Umgebungsbedingungen.

Ein derartiges Verfahren ist aus einem Vorlesungsskript der Technischen Akademie Esstingen, "Automatische Klimasysteme, Elektronik und Ergonomie", Lehrgang Nr. 21751/67.059 vom 12. und 13. Dezember 1996, Veranstaltungsort Ostfildem (Nellingen) bekannt.

Allgemein beinhaltet das Thermomanagement im Kraftfahrzeug die Kontrolle und Steuerung aller im Kraftfahrzeug vorkommenden Wärmeströme. Um die optimalen Betriebsbedingungen möglichst schnell einstellen zu können, müssen alle Wärmeerzeuger und Wärmeverbraucher kontrolliert bzw. gesteuert sowie deren Wärmeströme entsprechend dem Bedarf und der Priorität geleitet und kontrolliert werden. Ein Ziel dabei ist eine Verringerung des Kraftstoffverbrauchs, z. B. durch höhere Kühlmitteltemperatur im Teillastbetrieb, eine Minimierung der Abgasemissionen und eine Verbesserung des Komforts, z. B. durch möglichst schnelles Ansprechen der Innenraumheizung. Wegen der thermischen Trägheit des Verbrennungsmotors und des Motorkühlsystems wäre eine Voraussage über bevorstehende Lastbedingungen für den Motor wünschenswert. Bei dem aus dem obigen Vorlesungsskript bekannten Verfahren stützt sich eine Klimaregelautomatik auf ein Rechenmodell, das aus aktuellen Störgrößen generiert wird. Dabei werden die einem Fahrzeuginnenraum zugeführten und davon abgeführten Wärmemengen und die einem Verdampfer und/oder einem Heizkörper zu bzw. davon abgeführten Wärmemengen unter Berücksichtigung des genannten Rechenmodells des Reglers auf der Grundlage sensorisch erfasster aktueller Messwerte durch Erzeugung bzw. Korrektur von Stellgrößen für die Klimaregelung kontrolliert und gesteuert.

EP-A- 0974 742, die Stand der Technik nach Artikel 54(3) EPÜ bildet, offenbart ein Verfahren zur Regelung des Motorkühlkreislaufs eines Kraftfahrzeugs in Abhängigkeit von Laständerungen des Motors, wobei momentane und zukünftige Standortdaten des Fahrzeugs ermittelt und bei einer Höhenänderung zwischen momentanen und zukünftigen Standortdaten vorausschauend der Motorkühlkreislauf entsprechend der zu erwartenden Laständerung geregelt wird. Zur Standortermittlung kann bei diesem Verfahren z.B. auch ein Satellitennavigationssystem verwendet werden. Derzeit sind keine Lösungen bekannt, die vorausliegende lastrelevante Bedingungen für ein vorausschauendes Thermomanagement, d. h. die Kontrolle und Steuerung aller Wärmeströme, also auch der Klimaanlage im Fahrzeug verwenden würden. Es ist Aufgabe der Erfindung, ein Verfahren und eine dieses Verfahren ausführende Vorrichtung zur Steuerung/Regelung der von Wärmeerzeugem und Wärmeverbrauchern im Kraftfahrzaug verursachten Wärmeströme so anzugeben, dass ein vorausschauendes Thermomanagement wenigstens des Motorkühlsystems und der Klimaanlage zu einer verbrauchs-, und/oder emissionsund/oder komfortoptimierten Betriebsweise des Fahrzeugmotors führen kann. Die obige Aufgabe wird anspruchsgemäß gelöst. Gemäß einem wesentlichen Aspekt ist ein erfindungsgemäßes Verfahren dadurch gekennzeichnet, dass zusätzlich eine Vorhersage für vorausliegende Lastzustände des Motorkühlsystems auf der Grundlage eines fahrzustandsrelevante Größen und die thermische Trägheit des Motorkühlsystems berücksichtigenden Modells und von erfassten, in Fahrtrichtung vorausliegenden lastrelevanten Umgebungsbedingungen getroffen und eine diese vorausliegenden Betriebszustände, Umgebungsbedingungen und von. furiktionsrelevanten Sensoren für eine Fahrzeugklimaanlage gelieferte Signale berücksichtigende Steuerung/Regelung wenigstens der Wärmeströme des Motorkühlsystems und der Wärmeströme, die von der Klimaanlage zu- oder abgeführt werden ausgeführt wird. Um motorlastrelevante vorausliegende Umgebungsbedingungen zu erfassen, stehen mehrere einzelne Möglichkeiten oder auch eine Kombination derselben zur Verfugung. Zum einen können vorausliegende Umgebungsbedingungen aus von einem GPS-System gelieferten Signalen erfasst werden. Zum anderen können die vorausliegenden Umgebungsbedingungen aus .Signalen erfasst werden, die von einem gespeicherten kartographischen Umgebungsmodell erfasst werden. Drittens können vorausliegende Umgebungsbedingungen auch durch Funk von einer ortsfesten oder mobilen erdgebundenen Station zum Fahrzeug übertragen werden. Aus der Navigationstechnik für erdgebundene Fahrzeuge ist es bereits bekannt, gespeicherte kartographische Daten, z. B. über Straßenverlauf, Steigung usw. durch Daten, die von einer mobilen oder ortsfesten erdgebundenen Station oder von einem GPS-System über Satellit empfangen werden, zu aktualisieren.

Die für das erfindungsgemäße Verfahren wichtigen vorausliegenden motorlastrelevanten Umgebungsbedingungen umfassen insbesondere Steigungen, Gefälle, kurvenreiche Strecken, ebene Strecken und wahrscheinliche Fahrzeuganhaltesituationen.

Eine zur Ausführung dieses Verfahrens geeignete Vorrichtung zum Thermomanagement wenigstens des Motorkühlsystems im Kraftfahrzeug umfasst erfindungsgemäß eine Steuer/Regelungsvorrichtung, die zur Ausführung des erfindungsgemäßen Verfahrens eingerichtet ist.

Das erfindungsgemäße Verfahren umfasst nicht nur das Thermomanagement des Motorkühlsystems sondern beinhaltet die Kontrolle und Steuerung aller Wärmeströme im Kraftfahrzeug einschließlich der Wärmeströme, die von der Klimaanlage zu- oder abgeführt werden und einschließlich aller Wärmeströme, die in thermischen Speichern, wie z. B. Latentwärmespeichern oder Kältespeichern, ein- bzw. ausgespeichert werden.

Eine Kraftfahrzeugklimaanlage lässt sich somit durch eine funktionelle Verbindung mit der zur Durchführung des erfindungsgemäßen Verfahrens eingerichteten Steuer/Regelungsvorrichtung so kontrollieren und steuern, dass die jeweiligen Betriebspunkte für optimale Betriebsbedingungen schnell eingestellt werden können.

Eine derartige Klimaanlage kann über eine Eingabe/Ausgabeeinrichtung, z. B. am Armaturenbrett des Kraftfahrzeugs, für die Eingabe von Fahrwünschen und Anzeige von Betriebszuständen der Klimaanlage verfügen.

Die erwähnte funktionelle Verbindung der Klimaanlage.mit der zur Durchführung des erfindungsgemäßen Verfahrens eingerichteten Steuer/Regelungsvorrichtung kann durch eine Karosseriebusverbindung erfolgen, die auch eine Verbindung mit Sensoren und anderen Fahrzeugsteuergeräten, insbesondere mit einem GPS-Empfänger herstellen kann.

Ein derartiger Karosseriebus ist z. B. das bekannte CAN-Bussystem.

Mit dem erfindungsgemäßen Verfahren und der sie ausführenden Vorrichtung lassen sich Informationen über sich voraussichtlich einstellende Fahrzustände unter Einbeziehung der thermischen Trägheit des Motorkühlsystems für ein zu jedem Zeitpunkt optimales Thermomanagement von Wärmeerzeugem und -Verbrauchern im Kraftfahrzeug, nicht nur des Motorkühlsystems, ausnutzen.

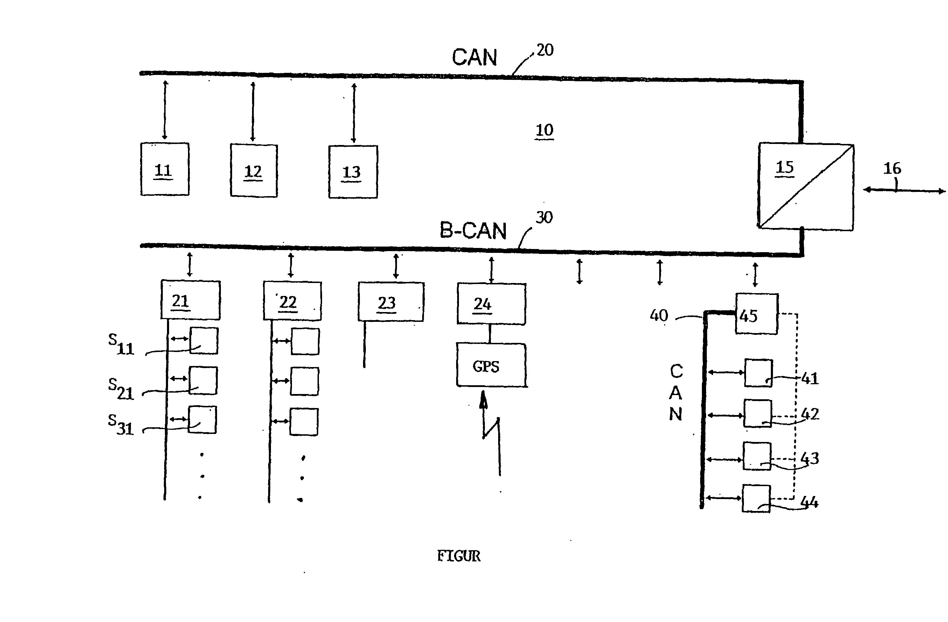

Die obigen und weitere vorteilhafte Merkmale der Erfindung werden in der nachstehenden Beschreibung eines Ausführungsbeispiels näher erläutert, das sich auf die beiliegenden Figur bezieht.

Die einzige Figur zeigt in Form eines Blockschaltbilds mehrere über eine Fahrzeugbusarchitektur in Wirkverbindung stehende. Steuergeräte.

Durch einen CAN-Bus 20 sind (nicht zur Erfindung zählende) Steuergeräte 11, 12, 13 für Motor-, Getriebe-, Fahrwerk- und Sicherheitsmanagementaufgaben verbunden. Der CAN-Bus 20 steht über einen Gateway-Knoten 15 einerseits mit einem B-CAN-Bus 30 und andererseits mit einer Diagnoseschnittstelle 16 in Verbindung.

Der B-CAN-Bus 30 verbindet beispielhaft ein zur Ausführung des erfindungsgemäßen Verfahrens zum Thermomanagement des Motorkühlsystems dienendes Steuergerät 21, ein Steuergerät 22 für die Klimaanlage, ein Steuergerät 23 für die Sitzelektronik und ein Steuergerät 24, welches zur Aufbereitung von von einem GPS-Empfänger gelieferten Daten dient. Ein weiterer CAN-Bus 40 kann zur Verbindung eines Zentralbildschirms 45 mit Ein-Ausgabekomponenten 41, einem Funkempfänger 42, einem Fernsehempfänger 43 und einem auf gespeicherten kartographischen Daten gestützten Navigationssystems 44 vorgesehen sein.

Wie gesagt, können vom GPS-Empfänger und/oder dem Navigationssystem 44 Informationen über die bevorstehende Straßenbeschaffenheit, wie z. B. Steigungen, Länge der Steigung oder Kurvenreichtum, erfasst und zumindest dem Steuergerät 21 über den B-CAN-Bus 30 zugeführt werden, so dass das Steuergerät 21 ein vorausschauendes Thermomanagement des Motorkühlsystems unter Berücksichtigung einer verbrauchs-, emissions- und komfortoptimierten Betriebsweise des Fahrzeugmotors durchführen kann.

Auch von dem Funkempfänger 42 und/oder dem Fernsehempfänger 43 können Informationen für eine Vorhersage vorausliegender lastrelevanter Umgebungszustände, wie z. B. Straßenbeschaffenheit, Kurvenreichtum, Steigungsstrecken und Gefällestrecken der Straße empfangen werden und wenigstens dem Steuergerät 21 zugeführt werden, das außer auf der Basis eines sensorisch erfassten momentanen Lastzustands des Kraftfahrzeugmotors und momentaner Fahrzeugbetriebs- und Umgebungsbedingung zusätzlich eine Vorhersage für vorausliegende Lastzustände des Motorkühlsystems auf der Grundlage eines fahrzustandsrelevante Größen und die thermische Trägheit berücksichtigenden Modells des Motorkühlsystems und außerdem auf der Grundlage der erfassten vorausliegenden motorlastrelevanten Umgebungsbedingungen trifft und die mit ihm in Wirkverbindung stehenden Stellglieder für eine entsprechende Steuerung/Regelung des Motorkühlsystems einstellt.

Das für die Steuerung/Regelung der Fahrzeugklimaanlage dienende SteuerlRegelungsgerät 22 kann auch solche vorausliegende Umgebungsbedingungen, wie sie z. B. die vom GPS-System und/oder Navigationssystem 44 gelieferten Informationen angeben, empfangen und zusätzlich die von der Klimaanlage beeinflussten Wärmeströme im Kraftfahrzeug im Sinne des erwähnten vorausschauenden Thermomanagements kontrollieren bzw. steuern.

Es sei noch erwähnt, dass auch ein das Fahrerverhalten berücksichtigendes adaptives (in der Figur nicht gezeigtes) Fahrermodell Einfluss auf das vorausschauende Thermomanagement wenigstens des Motorkühlsystems und optionell auch der Klimaanlage nehmen kann.

## Patentansprüche

1. Verfahren zur Steuerung/Regelung der von Wärmeerzeugern und Wärmeverbrauchern im Kraftfahrzeug verursachten Wärmeströme wenigstens auf der Basis eines momentanen Lastzustands des Kraftfahrzeugmotors und momentaner Fahrzeugbetriebs- und Umgebungsbedingungen, **dadurch gekennzeichnet, dass**
zusätzlich eine Vorhersage für vorausliegende Lastzustände des Motorkühlsystems auf der Grundlage eines fahrzustandsretevante Größen und die thermische Trägheit des Motorkühlsystems berücksichtigenden Modells und von erfassten, in Fahrtrichtung vorausliegenden lastrelevanten Umgebungsbedingungen getroffen und
eine diese. vorausliegenden Betriebszustände, Umgebungsbedingungen und von funktionsrelevanten Sensoren für eine Fahrzeugklimaanlage gelieferte Signale berücksichtigende Steuerung/Regelung wenigstens der Wärmeströme des Motorkühlsystems und der Wärmeströme, die von der Klimaanlage zu- oder abgeführt werden ausgeführt wird.

2. Steuer/Regelungsverfahren nach Anspruch 1, **dadurch gekennzeichnet, dass** die vorausliegenden Umgebungsbedingungen aus durch ein GPS-System gelieferten Signalen erfasst werden.

3. Steuer/Regelungsverfahren nach Anspruch 1, **dadurch gekennzeichnet, dass** die vorausliegenden Umgebungsbedingungen aus von einem gespeicherten kartographischen Umgebungsmodell gelieferten Signalen erfasst werden.

4. Steuer/Regelungsverfahren nach Anspruch 1, **dadurch gekennzeichnet, dass** die vorausliegenden Umgebungsbedingungen durch Funk von einer ortsfesten oder mobilen erdgebundenen Station übertragen und im Kraftfahrzeug empfangen werden.

5. Steuer/Regelungsverfahren nach einem der vorangehenden Ansprüche, **gekennzeichnet durch** eine Kombination der Merkmale von wenigstens zwei der Ansprüche 2 bis 4.

6. Steuer/Regelungsverfahren nach einem der vorangehenden Ansprüche, **dadurch gekennzeichnet, dass** die vorausliegenden Umgebungsbedingungen insbesondere Steigungen, Gefälle, kurvenreiche Strecken, ebene Strecken und wahrscheinliche Fahrzeuganhaltesituationen umfassen.

7. Steuer/Regelungsverfahren nach einem der vorangehenden Anspr iche, **dadurch gekennzeichnet, dass** die Steuerung/Regelung des Motorkühlsystems verbrauchs- und/oder emissions- und/oder komfortoptimierende Parameter für den Fahrzeugmotor berücksichtigt.

8. Vorrichtung zum Thermomanagement von Wärmeströmen in einem Kraftfahrzeug zur Ausführung des Verfahrens nach einem der Ansprüche 1 bis 7, wobei ein für das Thermomanagement des Motorkühlsystems eingerichtetes Steuergerät (21) und ein die Klimaanlage steuerndes/regelndes Steuergerät (22) und die für die Klimaanlage funktionsrelevanten Sensoren und für die Klimaanlage funktionsrelevante Stellglieder über eine Karosseriebusverbindung in funktione Iler Verbindung miteinander stehen.

9. Vorrichtung nach Anspruch 8, **dadurch gekennzeichnet, dass** sie weiterhin am Armaturenbrett eine Eingabe/Ausgabeeinrichtung zur Eingabe von Fahrerwünschen für die Klimaanlage und zur Anzeige von Betriebszuständen der Klimaanlage aufweist.

10. Vorrichtung nach Anspruch 8, **dadurch gekennzeichnet, dass** die Karosseriebusverbindung ein CAN-Bus ist.

## Claims

1. Method for controlling the heat flows which are caused by heat generators and heat consumers in the motor vehicle, at least on the basis of an instantaneous load state of the motor vehicle engine and instantaneous vehicle operating and ambient conditions, **characterized in that**
in addition a prediction of future load states of the engine cooling system is made on the basis of a model which takes into account driving-state-related variables and the thermal inertia of the engine cooling system, and of acquired, load-related ambient conditions lying ahead in the direction of travel, and a control process - which takes into account these future operating conditions, ambient conditions and signals which are supplied by function-related sensors for a vehicle air-conditioning system - at least of the heat flows of the engine cooling system and of the heat flows which are supplied or carried away by the air-conditioning system is carried out.

2. Control method according to Claim 1, **characterized in that** the future ambient conditions are acquired from signals which are supplied by a GPS system.

3. Control method according to Claim 1, **characterized in that** the future ambient conditions are acquired from signals which are supplied by a stored cartographic ambient model.

4. Control method according to Claim 1, **characterized in that** the future ambient conditions are transmitted by radio by a fixed or mobile earth-bound station and are received in the motor vehicle.

5. Control method according to one of the preceding claims, **characterized by** a combination of the features of at least two of Claims 2 to 4.

6. Control method according to one of the preceding claims, **characterized in that** the future ambient conditions comprise, in particular, positive gradients, negative gradients, sections of a route with a large number of bends, level sections of a route and situations in which vehicles will probably stop.

7. Control method according to one of the preceding claims, **characterized in that** the control process of the engine cooling system takes into account consumption-optimizing and/or emission-optimizing and/or comfort-optimizing parameters for the vehicle engine.

8. Device for performing thermal management of heat flows in a motor vehicle for carrying out the method according to one of Claims 1 to 7, a control device (21) which is designed to perform thermal management of the engine cooling system, and a control device (22) which controls the air-conditioning system and the sensors which relate to the functions of the air-conditioning system and actuator elements which relate to the functions of the air-conditioning system being functionally connected to one another via a vehicle bodywork bus connection.

9. Device according to Claim 8, **characterized in that** it also has an input/output device on the dashboard for inputting driver's wishes for the air-conditioning system and for displaying operating states of the air-conditioning system.

10. Device according to Claim 8, **characterized in that** the vehicle bodywork bus connection is a CAN bus.

## Revendications

1. Procédé de commande/régulation des flux thermiques engendrés par des générateurs de chaleur et/ou des consommateurs de chaleur dans un véhicule automobile au moins sur le fondement d'un état de charge instantané du moteur du véhicule et des conditions instantanées de fonctionnement du véhicule et d'environnement,
**caractérisé en ce qu'**
en plus on fait une prévision d'état de charge futur du système de refroidissement du moteur sur le fondement d'un modèle tenant compte de grandeurs caractéristiques de l'état de fonctionnement et de l'inertie thermique du système de refroidissement du moteur et de conditions d'environnement saisies, concernant la charge et situé en amont dans la direction de déplacement
et tenant compte de ces états de fonctionnement futurs, conditions d'environnement et de signaux fournis par des capteurs concernant le fonctionnement d'une installation de climatisation du véhicule, on commande et/ou on régule, au moins les flux thermiques du système de refroidissement du moteur et les flux thermiques que doit échanger l'installation de climatisation.

2. Procédé de commande/régulation selon la revendication 1,
**caractérisé en ce qu'**
on saisit les conditionnements d'environnement futurs par les signaux fournis par un système GPS.

3. Procédé de commande/régulation selon la revendication 1,
**caractérisé en ce qu'**
on saisit les conditions d'environnement futures à partir des signaux fournis par un modèle d'environnement cartographique, mis en mémoire.

4. Procédé de commande/régulation selon la revendication 1,
**caractérisé en ce qu'**
on transmet les conditions d'environnement futures par radio à partir de stations fixes ou mobiles associées au sol et reçues dans le véhicule.

5. Procédé de commande/régulation selon l'une des revendications précédentes,
**caractérisé par**
une combinaison des caractéristiques d'au moins deux des revendications 2 à 4.

6. Procédé de commande/régulation selon l'une des revendications précédentes,
**caractérisé en ce que**
les conditions d'environnement futures sont notamment les montées et les descentes, les trajets sinueux, les trajets plats et les situations d'arrêt probables.

7. Procédé de commande/régulation selon l'une des revendications précédentes,
**caractérisé en ce que**
la commande/régulation du système de refroidissement du moteur tient compte de paramètres de consommation et/ou d'émission et/ou de confort, optimisés pour le moteur du véhicule.

8. Dispositif de gestion thermique des flux thermiques d'un véhicule automobile pour exécuter le procédé selon l'une des revendications 1 à 7,
selon lequel
un appareil de commande (21) conçu pour la gestion thermique du système de refroidissement du moteur et un appareil de commande (22) qui commande/régule l'installation de climatisation ainsi que les capteurs concernant le fonctionnement de l'installation de climatisation et les organes d'actionnement concernant le fonctionnement de l'installation de climatisation sont reliés de manière à coopérer par une liaison formée par le bus installé dans la carrosserie.

9. Dispositif selon la revendication 8,
**caractérisé en ce qu'**
il comporte en outre au niveau du tableau de bord, une installation d'entrée/sortie pour introduire les souhaits du conducteur concernant l'installation de climatisation et pour afficher les états de fonctionnement de l'installation de climatisation.

10. Dispositif selon la revendication 8,
**caractérisé en ce que**
la liaison de bus installée dans la carrosserie est un bus CAN.
